Europäisches Patentamt

European Patent Office

Office européen des brevets

(19)

(11) Veröffentlichungsnummer: **0 397 920**
**A1**

(12) # EUROPÄISCHE PATENTANMELDUNG

(21) Anmeldenummer: **89123107.8**

(22) Anmeldetag: **14.12.89**

(51) Int. Cl.5: **F16H 61/22, F16H 59/10,**
**//F16H59:54**

Die Bezeichnung der Erfindung wurde geändert (Richtlinien für die Prüfung im EPA, A-III, 7.3).

(30) Priorität: **08.04.89 DE 3911570**

(43) Veröffentlichungstag der Anmeldung:
**22.11.90 Patentblatt 90/47**

(84) Benannte Vertragsstaaten:
**DE ES FR GB IT NL SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Jozefiak, Alfred, Dipl.-Ing. (FH)**
**Schillerstrasse 66**
**D-7531 Kieselbronn(DE)**
Erfinder: **Reustle, Albrecht, Dipl.-Ing. (FH)**
**Schulstrasse 6**
**D-7121 Walheim(DE)**

(54) **Betätigungsvorrichtung für ein automatisches Getriebe an einem Kraftfahrzeug.**

(57) Der Wählhebel (1) für ein automatisches Getriebe in einem Kraftfahrzeug kann für bestimmte Fahrsituationen in einer Neutralstellung (P und/oder N) durch eine Sperrvorrichtung verriegelt werden. Die Sperrvorrichtung weist drei Wälzkörper (6, 8, 22) auf, von denen einer (22) gesteuert in eine Stellung zwischen zwei weitere gebracht werden kann, so daß einer der Wälzkörper (8), der mit dem Wählhebel (1) fest verbunden ist, nicht aus seiner mittels einer federbelasteten Schiene (9) verrasteten Stellung bewegt werden kann.

FIG.1

EP 0 397 920 A1

## Einrichtung an einem Kraftfahrzeug

Die Erfindung betrifft eine Einrichtung an einem Kraftfahrzeug mit einem automatischen Getriebe und mit einer an dem Wählhebel des Getriebes angreifenden Sperrvorrichtung gemäß dem Oberbegriff des Anspruches 1.

Bei derartigen Fahrzeugen ist nach dem Anlassen des Motors der Wählhebel aus einer Neutralstellung (P (Parken) bzw. N) in eine Fahrstellung zu bewegen um das Fahrzeug anfahren zu können. Zu einem unbeabsichtigten Anfahren des Fahrzeuges kann es kommen, wenn der Wählhebel bei laufendem Motor aus der Neutralstellung versehentlich in eine Fahrstellung bewegt wird. Ebenso kann es zu einer ungewollt heftigen Beschleunigung kommen, wenn der Wählhebel in der Warmlaufphase des Motors bei erhöhter Leerlaufdrehzahl in eine Fahrstellung gebracht wird. Um solche Nachteile zu vermeiden, ist es aus dem US-Patent 4 572 340 bekannt, ein Bewegen des Wählhebels aus der Neutralstellung in eine Fahrstellung nur bei betätigter Fahrzeug-Bremse zu ermöglichen. Hierzu ist in dem mechanischen Gestänge zwischen Getriebe und Wählhebel ein getriebenaher, schwenkbarer Hebel angeordnet, der durch eine bewegliche Klinke verriegelt ist, solange die Bremse nicht betätigt ist. Bei betätigter Bremse wird die Klinke durch einen Hydraulikzylinder in eine Stellung gebracht, die den schwenkbaren Hebel entriegelt und somit das Einlegen einer Fahrstufe ermöglicht. Nachteilig bei dieser Ausführung ist das ungehinderte Einwirken von Betätigungskräften am Wählhebel auf das gesamte Gestänge, wenn in verriegelter Stellung versucht wird, den Wählhebel zu betätigen. Weiterhin ist es aus der EP-A 0 246 353 bekannt, einen den Wählhebel verriegelnden Hebel mit einem Elektromagneten zu entriegeln. Nachteilig bei dieser Ausführung ist die Tatsache, daß bei größeren Betätigungskräften am Wählhebel ein Verklemmen des den Wählhebel verriegelnden Hebels möglich ist, so daß der Elektromagnet trotz betätigter Fußbremse die Verriegelung nicht aufheben kann.

Es ist die Aufgabe der Erfindung, eine leicht zu betätigende Sperrvorrichtung für einen Wählhebel eines automatischen Getriebes zu schaffen, die die zuvor genannten Nachteile vermeidet und die nur ein beabsichtigtes Einlegen einer Fahrstufe ermöglicht. Weiterhin soll diese Verriegelung an vorhandene Fahrzeuge montierbar sein und daher wenig Bauraum beanspruchen und kostengünstig sein.

Die Lösung dieser Aufgabe gelingt mit den kennzeichnenden Merkmalen des Anspruchs 1.

Die erfindungsgemäße Vorrichtung verriegelt den Wählhebel in einer der Neutralstellungen P (Parken) bzw. N. Sie ermöglicht das Einlegen einer Fahrstufe nur bei betätigter Bremse. Die Verriegelung erfolgt durch das Zusammenwirken dreier zueinander beweglicher Wälzkörper, von denen einer drehbar am Wählhebel und ein weiterer an dem den Wählhebel lagernden Gehäuse drehbar angeordnet ist. Der dritte Wälzkörper ist durch ein Betätigungselement in eine Position zwischen die beiden erstgenannten Wälzkörper beweglich. Zwischen dem beweglichen und dem am Wählhebel angeordneten Wälzkörper ist eine durch Federkraft gegen den wählhebelfesten Wälzkörper gehaltene Schiene angeordnet, die in der P- bzw. N-Stellung je eine Vertiefung aufweist, in die der wählhebelfeste Wälzkörper einrasten kann. Befindet sich der Wählhebel in P- oder N- Stellung und wird der bewegliche Wälzkörper in Sperrstellung gebracht, kann der Wählhebel aus dieser Stellung heraus nicht bewegt werden, da der wählhebelfeste Wälzkörper formschlüssig in den Vertiefungen der Schiene eingerastet ist und ein kraftschlüssiges Verklemmen der drei Wälzkörper unter Zwischenschaltung der Schiene vorliegt. Vorteilhafterweise kann bei dieser Vorrichtung der bewegliche Wälzkörper durch das Betätigungselement mit geringen Stellkräften in die Sperrstellung hinein- und wieder herausbewegt werden. Trotz dieser geringen Kräfte kann der Wählhebel selbst mit großen Betätigungskräften nicht aus den gesperrten Stellungen bewegt werden. Nur durch eine beabsichtigte Handlung des Fahrers, das Betätigen der Fußbremse, wird die Sperre aufgehoben. Somit bleibt auch ein unbeabsichtigtes Bewegen des Wählhebels aus der Neutralstellung in eine Fahrstellung ohne Folgen, da dies nur bei betätigter Bremse möglich ist. Aufgrund der geringen erforderlichen Stellkräfte für den beweglichen Wälzkörper kann dessen Betätigungselement klein dimensioniert sein und beansprucht nur einen geringen Bauraum. Durch die Verwendung eines handelsüblichen Betätigungselements und ebensolcher Wälzkörper ist die gesamte Vorrichtung kostengünstig zu realisieren. Eine vorteilhafte Ausführung der Erfindung wird anhand der nachfolgend aufgeführten Figuren näher erläutert.

Es zeigt:

Fig. 1 schematisch eine erste Ausführungsform der Erfindung in nicht gesperrter Stellung,

Fig. 2 Teile von Fig. 1 in gesperrter Stellung P,

Fig. 3 schematisch eine weitere Ausführungsform der Erfindung in nicht gesperrter Stellung,

Fig. 4 Teile von Fig. 3 in gesperrter Stellung N,

Fig. 5 einen Schnitt entlang der Linie V-V in Fig. 1,

Fig. 6 einen Schnitt entlang der Linie VI-VI in Fig. 1.

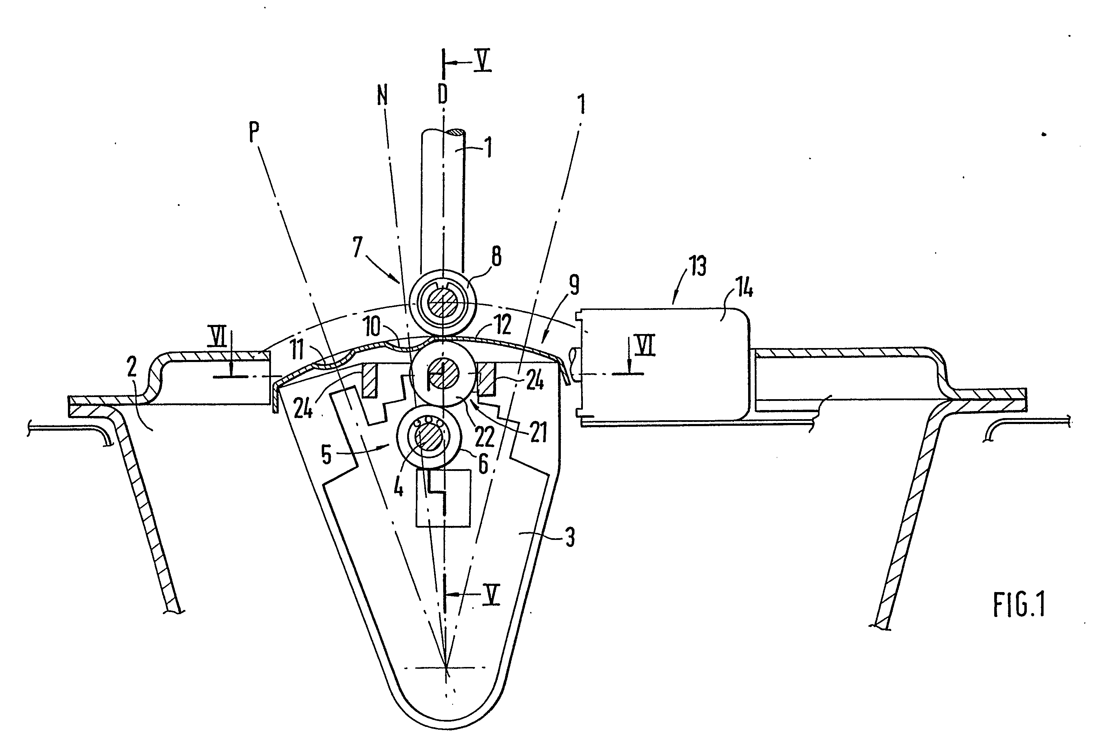

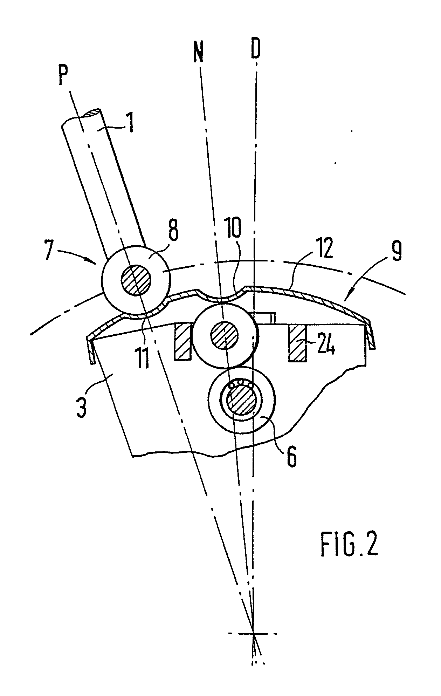

Die an dem Wählhebel 1 angreifende Sperrvorrichtung ist in einem den Wählhebel 1 aufnehmenden Gehäuse 2 zwischen den Vordersitzen eines Kraftfahrzeuges angeordnet. In dem Gehäuse 2 ist ein Träger 3 befestigt, der gemeinsam mit dem Gehäuse 2 den Wählhebel 1 drehbar lagert. Oberhalb des Drehpunktes des Wählhebels 1 ist zwischen dem Träger 3 und dem Gehäuse 2 eine Achse 4 angeordnet, auf der mit einem reibungsarmen Nadellager eine als Stützglied 5 wirkende Rolle 6 gelagert ist. Am Wählhebel 1 und mit diesem gemeinsam verschwenkbar ist eine drehbare, als Verrastungsglied 7 wirkende Rolle 8 befestigt. Auf dem oberen Ende des Trägers 3 ist eine federbelastete Schiene 9 angeordnet, die im Bereich der Neutralstellungen N und P je eine diesen Stellungen zugeordnete Vertiefung 10, 11 aufweist. Die Schiene 9 ist gemäß Fig. 1 und Fig. 2 als Blattfeder 12 ausgebildet, die im gespannten Zustand auf dem Träger 3 befestigt ist. Durch die Federkraft der Blattfeder 12 wird diese in ständigem Kontakt mit der Rolle 8 des Wählhebels 1 gehalten. Im Gehäuse 2 ist ein als Betätigungselement 13 wirkender Hubmagnet 14 angeordnet, der über elektrische Anschlüsse 15 an einen Stromkreis angeschlossen ist, der von einer Logik-Schaltung 16 gesteuert wird. Der Hubmagnet 14 weist einen geschlitzten Zapfen 17 auf, in dem mit einem Stift 18 ein als Pleuel 19 wirkender Hebel fixiert ist. Am vorderen Ende nimmt das Pleuel 19 einen Bolzen 20 auf, auf dem eine als Sperrglied 21 wirkende Rolle 22 drehbar angeordnet ist. Diese Rolle 22 steht in ständigem Kontakt mit der Rolle 6. Zwischen dem Pleuel 19 und der Rolle 22 ist auf dem Bolzen 20 ein Hebel 23 angeordnet, der mit seinem gegenüberliegendem Ende auf der Achse 4 gelagert ist. Alle Rollen 6, 8, 22 drehen sich um zueinander parallele Achsen, die senkrecht zur Bewegungsrichtung des Wählhebels 1 liegen. An Stelle der Rollen 6, 8, 22 können auch andere Wälzkörper, z.B. Kugeln oder Kegelrollen verwendet werden.

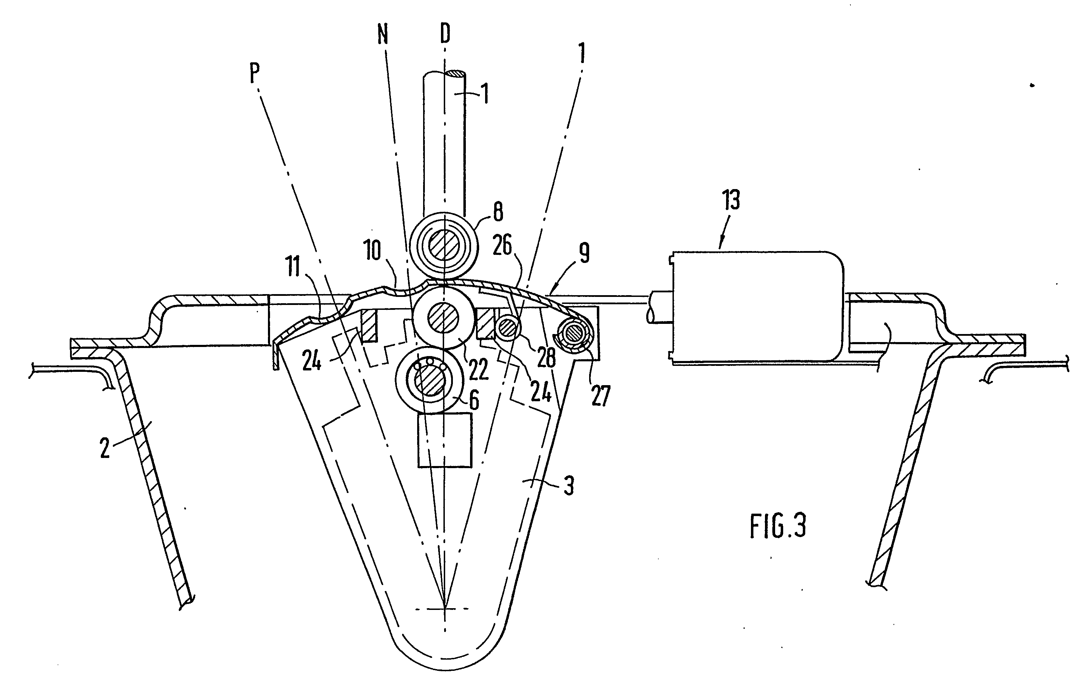

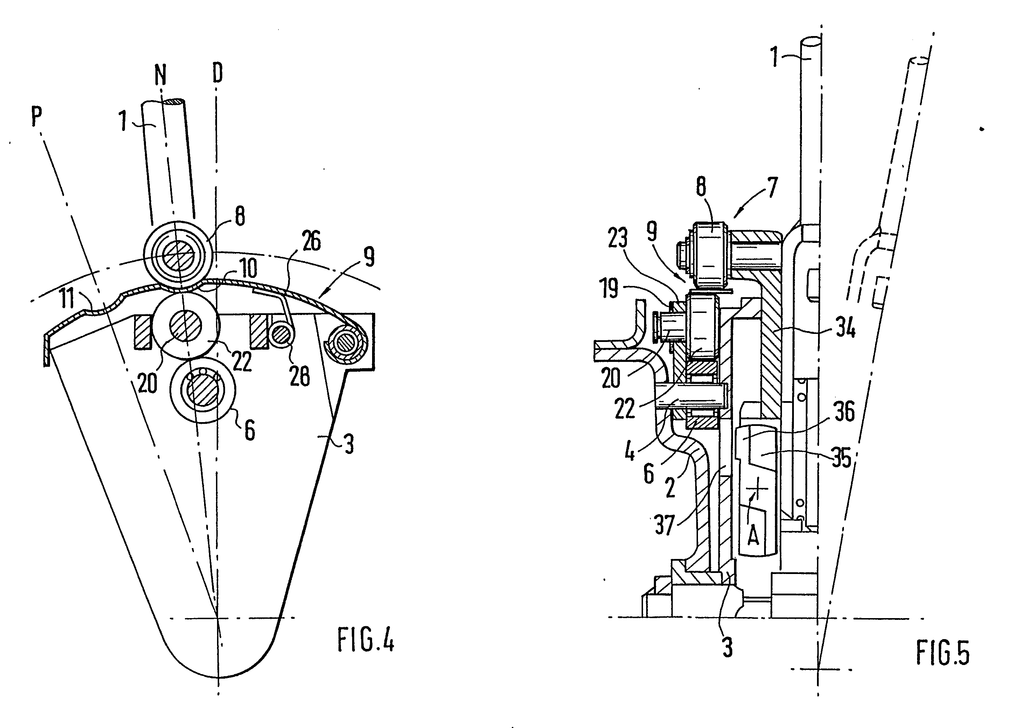

Der Hubmagnet 14 kann als ziehender oder drückender Magnet ausgeführt werden. In beiden Fällen bewegt der Hubmagnet 14 über das Pleuel 19 die Rolle 22 zwischen zwei am Träger 3 ausgebildeten Anschlägen 24. Als drückender Hubmagnet 14 bewegt sich die Rolle 22 bei aktiviertem Stromkreis von der in Fig. 1 gezeigten, nicht sperrenden Stellung, in die in Fig. 2 und Fig. 4 gezeigte Sperrstellung. Bei nicht aktiviertem Stromkreis stellt eine an dem Bolzen 20 angreifende Feder 25 die Rolle 22 in ihre Ausgangslage zurück. In einer weiteren Ausführungsform der Erfindung gemäß Fig. 3 ist die Schiene 9 als Klinke 26 ausgebildet und am Träger 4 um eine Lagerung 27 drehbar angeordnet. Die Klinke 26 ist starr und weist identische Vertiefungen 10, 11 wie die als Blattfeder 12 ausgebildete Schiene 9 auf. Durch eine Feder 28, die sich an einem Anschlag 24 abstützt, wird die Klinke 26 gegen die Rolle 8 gedrückt. Die Feder 28 ist mit einer Verschraubung 27 am Träger 3 befestigt. Anstelle des ziehenden oder drückenden Hubmagneten 14 kann auch ein in beide Richtungen arbeitender Hubmagnet verwendet werden, wobei die Feder 25 überflüssig wird.

Als Betätigungselement 13 kann statt eines Hubmagneten auch ein pneumatisches, hydraulisches oder ähnliches Betätigungselement Verwendung finden. Die Logik-Schaltung 16 verwertet Informationen, die von einem ein drehzahl- und ein fahrgeschwindigkeitsabhängiges Signal abgebenden Sensor 29, von einem die Stellung des Zündschlüssels erfassenden Sensor 30, von einem die Bremspedalbetätigung erfassenden Schalter 31, von einem den im nicht gezeigten Getriebe des Kraftfahrzeuges eingelegten Gang erfassenden Sensor 32 und von einem die Stellung des Wählhebels erkennenden Sensor 33 stammen. Ist das Fahrzeug abgestellt und der Zündschlüssel abgezogen, ist der Wählhebel 1 in der in Fig. 2 bzw. Fig. 4 gezeigten P- oder N-Stellung durch die Sperrvorrichtung verriegelt. Das Sperrglied 21 befindet sich dabei in Sperrstellung. Diese Sperrstellung kann nur erreicht werden, wenn die Schiene 9 aufgrund ihrer Federbelastung und der Vertiefungen 10, 11 soweit nach oben ausweicht, daß das Sperrglied 21 mittels des Betätigungselements 13 oder mittels der Feder 25 ungehindert zwischen das Stützglied 5 und die Schiene 9 gebracht werden kann. Die dafür erforderlichen Stellkräfte sind sehr gering, da die Rolle 6 reibungsarm gelagert ist. Daher können das Betätigungselement 13 bzw. die Feder 25 entsprechend gering dimensioniert werden. Der Wählhebel 1 kann aus diesen Stellungen auch durch große Betätigungskräfte nicht in eine Fahrstellung bewegt werden, da weder die Rolle 8 nach oben noch die Schiene 9 nach unten ausweichen kann. Ein unbeabsichtigtes Verschieben des Wählhebels 1 in eine Fahrstellung z.B. durch im Fahrzeug spielende Kinder ist damit ausgeschlossen. Ist der Motor des Fahrzeuges angelassen worden und soll eine Fahrstellung des Wählhebels 1 eingelegt werden, so ist dies nicht ohne eine beabsichtigte Handlung des Fahrers, das Betätigen des Bremspedals, möglich. Somit ist sichergestellt, daß sich der Fahrer über das Vorhandensein und die Lage des Bremspedals bewußt ist. Ist das Bremspedal getreten, so befördert das Betätigungselement 13 oder die Feder 25 die Rolle 22 in die nicht sperrende Stellung gemäß Fig. 1 oder Fig. 3. Jetzt ist es aufgrund der speziellen Ausbildung der Schiene 9 als Blattfeder 12 oder federnde Klinke 26 möglich, den Wählhebel 1 in eine Fahrstellung zu bewegen. Die Rolle 8 drückt dabei die Schiene 9 entgegen der Federkraft nach unten, so daß die Verrastung durch die Vertiefungen 10, 11 wirkungslos ist. Der Wählhebel 1 kann nun beliebig zwischen den üblichen Fahrstellungen D, 3, 2 etc. bewegt werden. Die als Blattfeder 12 ausgeführte Schiene 9 verändert ihre äußere Kontur je nach Stellung der Rolle 8 in oder außerhalb einer Vertiefung 10, 11. Die beiden Enden der Blattfeder 12 bleiben dabei in ständigem Kontakt mit dem Träger 3. Im Gegensatz dazu behält die Klinke 26 ihre äußere Kontur bei, dreht sich aber je nach Stellung des Wählhebels 1 um die Lagerung 27. Somit verändert sich der Abstand des der Lagerung 27 gegenüberliegenden Endes der Klinke 26 gegenüber dem Träger 3. Die der Logik-Schaltung 16 angelieferten Informationen sorgen für ein praxisnahes Betätigen der Sperrvorrichtung. Wird beispielsweise oberhalb einer bestimmten Fahrgeschwindigkeit in die N-Stellung geschaltet, so wird die Sperrvorrichtung nicht aktiviert, um ein Bremsen zu vermeiden. Ebenso wird die Sperrvorrichtung nicht aktiv, wenn innerhalb kurzer Zeitspannen bei festgefahrenem Fahrzeug zwischen R und D umgeschaltet wird. Sollte die beschriebene Sperrvorrichtung aufgrund eingeengter Einbaubedingungen nicht in der in den Figuren gezeigten Position einbaubar sein, so kann sie ohne jeglichen Funktionsverlust z.B. um 90° im oder entgegen dem Uhrzeigersinn um den Drehpunkt des Wählhebels 1 verdreht werden. Die Rolle 8 ist dann an einem mit dem Wählhebel fest verbundenen Ausleger befestigt.

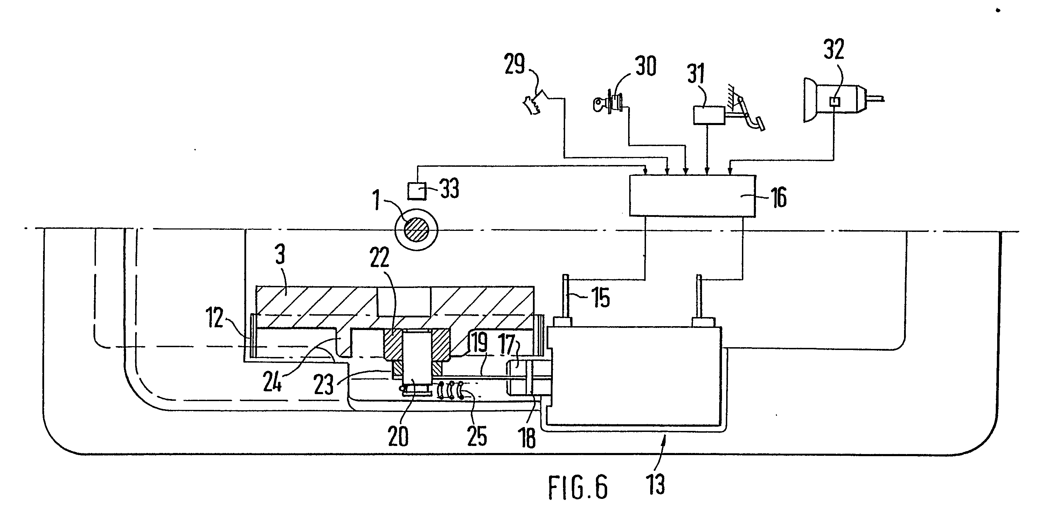

Weist die den Wählhebel 1 führende, nicht gezeigte Kulisse eine weitere Schaltgasse auf, die parallel zu der die Schaltstellungen des automatischen Getriebes aufweisenden Schaltgasse liegt, so wird der Wählhebel 1 beim Umschalten zwischen diesen Schaltgassen quer zur üblichen Bewegungsrichtung geschwenkt. Durch dieses Verschwenken wird die bisher starre Verbindung zwischen dem Verrastungsglied 7 und dem Wählhebel 1 aufgehoben. Ein das Verrastungsglied 7 lagernder Hebel 34 verbleibt beim Verschwenken in der in Fig. 5 gezeigten Position. Die drei Glieder 5, 7, 21 verbleiben somit in der in Fig. 3 gezeigten Stellung und stellen sicher, daß die Sperrvorrichtung nach dem Verschwenken des Wählhebels 1 nicht aktiviert werden kann. In der zweiten Schaltgasse können beispielsweise einzelne Vorwärtsfahrstufen manuell schaltbar sein. Ein um seine Drehachse A entgegen dem Uhrzeigersinn, durch das Verschwenken des Wählhebels 1 gedrehtes Element 35, rastet mit einer Nase 36 in eine Aussparung 37 des Trägers 3. Dieses Element 35 sorgt dafür, daß der Wählhebel 1 nach dem Zurückschwenken in die Automatikgasse exakt die gleiche Position relativ zu der Kulisse und zum Träger 3 einnimmt, die er beim Herausschwenken aus der Automatikgasse hatte. Das Umschalten des Wählhebels 1 zwischen den Schaltgassen wird der Logik-Schaltung 16 über den Sensor 33 mitgeteilt.

## Ansprüche

1. Einrichtung an einem Kraftfahrzeug, mit einer Bremse und mit einem automatischen Getriebe und einer am Wählhebel des Getriebes angreifenden Sperrvorrichtung, die den in einem Gehäuse gelagerten Wählhebel in einer Neutralstellung bei nicht betätigter Bremse verriegelt und mit einem Betätigungselement für die Sperrvorrichtung, dadurch gekennzeichnet, daß die Sperrvorrichtung
- drei Wälzkörper mit zueinander parallelen Drehachsen aufweist, wobei der eine Wälzkörper als Stützglied (5) für den an ihn bei Sperrstellung in Anlage bringbaren, als Sperrglied (21) wirkenden, zweiten Wälzkörper dient und das Sperrglied (21) durch das Betätigungselement (13) verstellbar ist,
- eine durch Federkraft gegen den dritten, drehbar am Wählhebel (1) gelagerten, als Verriegelungsglied (7) wirkenden, Wälzkörper gehaltene, mit Vertiefungen (10, 11) versehene Schiene (9) aufweist, wobei in Sperrstellung ein kraftschlüssiges Verklemmen der drei Wälzkörper unter Zwischenschaltung der Schiene (9) vorliegt.

2. Einrichtung nach Anspruch 1, dadurch gekennzeichnet, daß als Schiene (9) eine Blattfeder (12) verwendet wird.

3. Einrichtung nach Anspruch 1, dadurch gekennzeichnet, daß als Schiene (9) eine starre Klinke (26) verwendet wird, die federnd abgestützt ist.

4. Einrichtung nach Anspruch 2 oder 3, dadurch gekennzeichnet, daß für die als Stützglied (5), Verrastungsglied (7) und Sperrglied (21) wirkenden Wälzkörper Rollen (6, 8, 22) verwendet werden.

5. Einrichtung nach Anspruch 1, dadurch gekennzeichnet, daß im Gehäuse (2) ein Träger (3) befestigt ist, der die Schiene (9) und das Stützglied (5) lagert, wobei das Stützglied (5) auf einer zwischen Gehäuse (2) und Träger (3) verlaufenden Achse (4) angeordnet ist.

6. Einrichtung nach Anspruch 5, dadurch gekennzeichnet, daß auf der Achse (4) ein Hebel (23) gelagert ist, der mit einem Bolzen (20) verbunden ist, auf dem das Sperrglied (21) angeordnet ist.

7. Einrichtung nach Anspruch 6, dadurch gekennzeichnet, daß das Betätigungselement (13) mittels eines Pleuels (19) mit dem Bolzen (20) verbunden ist und den Bolzen (20) gemeinsam mit dem Hebel (23) und dem Sperrglied (21) zwischen am Träger (3) angeordneten Anschlägen (24) um den Drehpunkt des Stützgliedes (5) verschwenkt.

8. Einrichtung nach Anspruch 7, dadurch gekennzeichnet, daß das Betätigungselement (13) von einer Ausgangslage aus in eine Richtung wirkt und die Rückstellung in die Ausgangslage durch eine Feder (25) erfolgt, die entgegen dieser Richtung wirkt.

9. Einrichtung nach Anspruch 8, dadurch gekennzeichnet, daß die Ausgangslage des Betätigungselements (13) die den Wählhebel (1) nicht sperrende Stellung des Sperrgliedes (21) ist.

10. Einrichtung nach einem oder mehreren der vorhergehenden Ansprüche, dadurch gekennzeichnet, daß das Betätigungselement (13) ein Hubmagnet (14) oder ein pneumatisches oder hydraulisches Element ist.

11. Einrichtung nach Anspruch 7, dadurch gekennzeichnet, daß das Betätigungselement (13) ein in zwei Richtungen wirkender Hubmagnet (14) ist.

12. Einrichtung nach Anspruch 1 und 8, dadurch gekennzeichnet, daß das Betätigungselement (13) durch das Bedienen der Bremse ausgelöst wird.

13. Einrichtung nach Anspruch 1, mit einer den Wählhebel führenden Kulisse, die mindestens zwei Schaltgassen aufweist, zwischen denen der Wählhebel verschwenkt werden kann, wobei eine Schaltgasse eine Automatikgasse ist, die die bei einem Automatikgetriebe üblichen Schaltstellungen aufweist und in einer zweiten Schaltgasse einzelne Vorwärtsfahrstufen manuell schaltbar sind, dadurch gekennzeichnet, daß die Sperrvorrichtung nach dem Verschwenken des Wählhebels (1) nur in der Automatikgasse wirksam ist.

FIG.1

EP 0 397 920 A1

FIG.2

FIG.3

FIG.4

FIG.5

EP 0 397 920 A1

FIG.6

EP 0 397 920 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | US-A-4572340 (PIERCE)<br>* Spalte 2, Zeile 37 - Spalte 4, Zeile 54; Figuren 1, 2 *<br>---- | 1, 10, 12 | F16H61/22<br>F16H59/10 //<br>F16H59:54 |
| A,D | EP-A-246353 (AUDI)<br>* Ansprüche 1-2, 5, 14; Figuren 1, 2 *<br>---- | 1, 10, 12 | |
| A | US-A-4235123 (SIMANCIK)<br>* Spalte 1, Zeile 48 - Spalte 2, Zeile 51; Figuren 1-4 *<br>---- | 1-2 | |
| A | FR-A-2288640 (RENAULT)<br>* Seite 1, Zeile 34 - Seite 2, Zeile 17; Figuren 1, 4 *<br>----- | 1 | |

**RECHERCHIERTE SACHGEBIETE (Int. Cl.5 )**

F16H
B60K
G05G

Der vorliegende Recherchenbericht wurde für alle Patentansprüche erstellt

| Recherchenort | Abschlußdatum der Recherche | Prüfer |
|---|---|---|
| DEN HAAG | 17 JULI 1990 | FLODSTROEM J.B. |